# EUROPÄISCHE PATENTSCHRIFT

(11) **EP 3 756 888 B1**
(45) Veröffentlichungstag und Bekanntmachung des Hinweises auf die Patenterteilung: **16.03.2022**
(21) Anmeldenummer: 20181492.8
(22) Anmeldetag: 22.06.2020
(51) Int. Cl.: B32B 33/00, B29C 45/14, B32B 37/02, B32B 38/00, B32B 38/10, B29L 31/30

(54) **VERFAHREN ZUM HERSTELLEN EINES DEKORTEILS**
METHOD FOR PRODUCING A DECORATIVE PART
PROCÉDÉ DE FABRICATION D'UNE PIÈCE DÉCORATIVE

(30) Priorität: 28.06.2019 DE 102019209501
(43) Veröffentlichungstag der Anmeldung: 30.12.2020
(73) Patentinhaber: Joysonquin Automotive Systems GmbH, 71277 Rutesheim (DE)
(72) Erfinder: Schmidt, Martin, 74582 Gerabronn (DE); Wengert, Claudia, 75175 Pforzheim (DE)
(74) Vertreter: Grünecker Patent- und Rechtsanwälte PartG mbB

(56) Entgegenhaltungen:
- DE-A1-102008 009 766
- DE-A1-102012 016 147
- DE-U1-202019 101 689

## Beschreibung

Die vorliegende Erfindung betrifft ein Verfahren zum Herstellen eines Dekorteils, insbesondere eines Dekorteils, welches als Kfz-Innenauskleidungsteils zur Anwendung kommt. Solche Innenauskleidungsteile können Auskleidungsteile für die Mittelkonsole oder die Türen bzw. Dekorteile in dem Armaturenbrett des Fahrzeugs sein.

Heutzutage werden insbesondere Dekorteile für die Kfz-Innenausstattung hergestellt, indem eine Dekorlage, die die sichtseitige Oberfläche des Dekorteils ganz oder teilweise ausbildet, rückseitig mit einer Verstärkungslage hinterspritzt und sichtseitig mit einem transparenten Überzug versehen. An solches Verfahren ist aus DE 41 24 297 A1 bekannt. Im Hinblick auf eine gute mechanische Ankopplung der rückseitigen Hinterspritzung an die Dekorlage ist es ferner bekannt, diese Dekorlage mit einer Kaschierung zu versehen. Dabei wird die Kaschierung üblicherweise vor dem Umspritzen der Dekorlage auf die Dekorlage aufgebracht.

Aus DE 10 2008 009 766 A1 ist ein Verfahren zur Herstellung eines Dekorteils bekannt, bei dem auf eine Materialschicht eine obere und eine untere Vlieskaschierung aufkaschiert wird. In einem ersten Fügeschritt wird ein Edelholzfurnier auf der Oberseite der Materialschicht mit der Kaschierung verbunden. Dabei wird ein mehrschichtiger Aufbau bestehend aus dem Edelholzfurnier, der oberen Kaschierungsschicht und der Materialschicht geschaffen. Das die obere Kaschierungsschicht ausbildende Material hat eine geringere Aktivierungstemperatur als das Kaschierungsmaterial auf der Unterseite. So wird beim Erzeugen des mehrschichtigen Aufbaus nur die an der Oberseite vorgesehen Kaschierung, nicht aber die auf der Unterseite liegende Kaschierung aktiviert. Die Bedingungen werden dabei aber so eingestellt, dass selbst die an der Oberseite vorgesehene Kaschierung nicht vollständig aushärtet. Der mehrschichtige Aufbau wird danach in eine Spritzgussform eingelegt und zur Ausbildung einer Verstärkungslage hinterspritzt. Die dabei wirkenden Temperaturen und Drücke sind dabei erheblich höher als die Bedingungen zur Aktivierung der an der Oberseite vorgesehenen Kaschierung. So wird die auf der Unterseite befindliche Kaschierung aktiviert und die auf der gegenüberliegenden Seite vorgesehene obere Kaschierungsschicht vollständig abgebunden, die zuvor und beim Spritzgießen aufgrund der noch nicht vollständigen Abbindung ein Gleiten und damit eine geringfügige Relativbewegung des Edelholzfurniers relativ zu der Materialschicht ermöglicht und somit Schäden an dem Edelholzfurniers während des Hinterspritzens verhindert hat.

Es sind verschiedene Kaschierungen bekannt, die auch für die Anwendung der vorliegenden Erfindung zur Anwendung kommen können. So kann die Kaschierung durch Kombination eines Vliesmaterials mit Leim gebildet sein. Die Kaschierung kann beispielsweise ein beidseitig beleimtes Vlies sein. Solche Kaschierungen werden üblicherweise durch Flachbett-Kaschieren auf die Dekorlage aufgebracht. Dabei wird die Kaschierung auf einen ebenen Tisch aufgebracht. Die Dekorlage wird auf die Kaschierung aufgelegt. Durch einen gegen den Tisch angefahrenen Stempel werden die Kaschierung und die Lage unter Anwendung von Druck und Temperatur miteinander verbunden. Der Leimfilm kann dabei auf Basis von Phenol, Melamin, Acryl, Polyurethan oder deren Kombinationen ausgebildet sein. Solche Kaschierungen sind vor allem in der Möbelbranche bekannt und üblich. Durch das Anwenden von Druck und Temperatur wird der Leimfilm vernetzt. Er verbindet sich dementsprechend mit der Lage. Eine alternative Kaschierung wird durch eine ein- oder mehrschichtige Kunststofffolie gebildet. Eine solche Kunststofffolie wird üblicherweise aufkalandriert. Eine Mehrschichtfolie findet üblicherweise dann Verwendung, wenn einerseits die Kaschierung zur bestmöglichen Haftung an der Lage und zur bestmöglichen Haftung an eine dagegen gelegte Lage, beispielsweise die rückseitige Verstärkungslage angepasst sein soll. In diesem Fall hat eine Schicht besonders gute Haftungseigenschaften zur der ersten Lage und die andere Schicht besonders gute Haftungseigenschaften zu der zweiten Lage. Auch hier erfolgt das Aufkaschieren durch Anwendung von Druck und Wärme. Die Wärme bringt das Kunststoffmaterial der Folie zumindest zum Fließen, ggf. wird die Folie angeschmolzen, wodurch die Haftung mit der bzw. den Lage(n) verbessert ist.

Aus gestalterischen Gründen besteht mitunter die Notwendigkeit, verschiedene Lagen als separate Schichten hintereinander anzuordnen. So ist es beispielsweise aus DE 10 2012 016 147 A1 bekannt, eine erste, mit Durchbrechungen versehene Lage mit einer zweiten Lage zunächst zu verbinden. Das so gebildete Zwischenerzeugnis wird in eine Spritzgießform eingelegt, um an der Rückseite der zweiten Lage eine Verstärkungslage anzuspritzen.

Der vorliegenden Erfindung liegt das Problem zugrunde, ein wirtschaftliches und ressourcenschonendes Verfahren zur Herstellung eines Dekorteils mit mehreren Lagen anzugeben. Gemäß der Erfindung wird hierzu ein Verfahren mit den Merkmalen von Anspruch 1 vorgeschlagen. Bei diesem Verfahren wird in einem ersten Kaschierungsschritt die erste Lage unter Anwendung von Druck und Wärme mit einer ein beleimtes Vlies oder eine Kunststofffolie umfassenden ersten Kaschierung verbunden. In einem zweiten, nachfolgenden Kaschierungsschritt wird eine zweite Lage unter Druck und Wärme mit einer zweiten Kaschierung verbunden. Dabei wirkt die in dem zweiten Kaschierungsschritt eingebrachte Wärme auch in der ersten Kaschierung. Die Wirkung der in dem zweiten Kaschierungsschritt eingebrachten Wärme in der ersten Kaschierung ist derart, dass eine verbesserte Haftvermittlung zwischen der ersten Kaschierung und der ersten Lage erreicht wird.

Der erste Kaschierungsschritt zum Verbinden der ersten Kaschierung mit der ersten Lage erfolgt üblicherweise so, dass der dabei hergestellte Verbund noch unvollständig ist. Es wird nur eine unzureichende Energie in Form von Druck bzw. Temperatur in dem ersten Kaschierungsschritt eingebracht, wodurch in diesem ersten Kaschierungsschritt Ressourcen geschont werden können. Im Falle eines vernetzenden Haftvermittlers, der Bestandteil der ersten Kaschierung ist, wird dieser Haftvermittlers in dem ersten Kaschierungsschritt nur geringfügig vernetzt oder teilvernetzt. Der maximale Vernetzungsgrad bei einer aktivierbaren Kaschierung nach dem ersten Kaschierungsschritt liegt üblicherweise unter 50 Prozent.

In dem zweiten Kaschierungsschritt wird die Verbundkraft zwischen der ersten Lage und der ersten Kaschierung erhöht.

Im Falle eines vernetzenden Haftvermittlers, der Bestandteil der ersten Kaschierung ist, wird durch die in dem zweiten Kaschierungsschritt eingebrachte Wärme auch in der ersten Kaschierung eine weitere, ggf. vollständige Vernetzung erreicht. Jedenfalls hat die Haftung der ersten Kaschierung an der ersten Lage nach dem zweiten Kaschierungsschritt eine bessere Qualität als nach dem ersten Kaschierungsschritt. Entsprechendes gilt für einen als Thermoplasten ausgebildet Haftvermittler, der mit der ersten Lage verbunden ist. Auch hier wirkt der zweite Kaschierungsschritt aufgrund der eingebrachten Wärme eine Haftung mit verbesserter Qualität gegenüber der Haftung, die nach dem ersten Kaschierungsschritt erreicht ist.

Das erfindungsgemäße Verfahren lässt sich energetisch günstig durchführen. Es ist nicht erforderlich, dass bereits in dem jeweiligen Kaschierungsschritt die Haftung der Kaschierung an der zugeordneten Lage vervollständigt ist. Vielmehr kann ein zeitlich vorangegangener Kaschierungsschritt zunächst lediglich genutzt werden, um die hierbei mit der Lage verbundene Kaschierung daran anzuhaften bzw. damit zu verbinden. Ein vollständiger, den praktischen Erfordernissen genügender Verbund muss nicht bereits in dem zeitlich vorgelagerten Kaschierungsschritt erfolgen. Vielmehr wird die in dem oder den nachfolgenden Kaschierungsschritt(en) eingebrachte Prozessenergie genutzt, um die Haftung zwischen einer Lage und einer Kaschierung, die in einem zeitlich vorgelagerten Kaschierungsschritt zunächst miteinander verbunden wurden, zu verbessern. Die Prozessenergie ist dabei nicht nur auf den Wärmeeintrag beschränkt. Vielmehr kann der für einen nachfolgenden Kaschierungsschritt aufgebrachte Pressdruck in Verbindung mit einer Presszeit in gleicher Weise synergistisch genutzt werden.

Erfindungsgemäß werden in dem ersten und zweiten Kaschierschritt jeweils im Wesentlichen ebene mehrschichtige Zwischenerzeugnisse erzeugt. Dabei erfolgt die Kaschierung üblicherweise in einer Flachbett-Kaschieranlage. Nach dem ersten Kaschierungsschritt wird ein im Wesentlichen ebener Schichtverbund erzeugt. Die erste Lage des Schichtverbundes ist üblicherweise an der Sichtseite des Dekorteils sichtbar und kann durch ein Furnier gebildet sein. Dieser Schichtverbund wird an seiner der Sichtseite abgewandten Rückseite in dem zweiten Kaschierungsschritt mit der zweiten Lage verbunden. Dabei wird üblicherweise die zwischen der ersten Lage und der zweiten Lage vorgesehene erste Kaschierung genutzt, um die erste und zweite Lage miteinander zu verbinden. Es ergibt sich ein als Sandwichaufbau bezeichnetes im Wesentlichen ebenes Zwischenerzeugnis, das an seiner Rückseite mit der zweiten Kaschierung versehen ist. Diese zweite Kaschierung wird in dem zweiten Kaschierungsschritt mit der zweiten Lage verbunden. Eine Kaschierung im Sinne der vorliegenden Erfindung ist dabei eine ein- oder mehrlagige Haftvermittlerschicht, die in dem Kaschierungsschritt zumindest einseitig an die zugeordnete Lage anbindet. In dem zweiten Kaschierungsschritt bindet dabei die erste Kaschierung an eine Oberfläche der zweiten Lage an, wohingegen die zweite Kaschierung an die gegenüberliegende Oberfläche der zweiten Lage anbindet. Im Falle einer mehrlagigen Haftvermittlerschicht zwischen der ersten und der zweiten Lage kann die der ersten Lage zugeordnete Oberfläche der Haftvermittlerschicht in dem zweiten Kaschierungsschritt entweder hinsichtlich ihrer Haftung verändert werden oder unverändert bleiben. Die in dem zweiten Kaschierungsschritt mit der zweiten Lage verbundene zweite Kaschierung liegt üblicherweise nach dem zweiten Kaschierungsschritt an der Rückseite der zweiten Lage frei. So ist der Sandwichaufbau für das Anspritzen eines die Verstärkungslage ausbildenden Kunststoffs vorbereitet.

Bei dem ersten bzw. zweiten Kaschierungsschritt wirken Drücke von zwischen 0,5 bis 2 N/mm².

Der so hergestellte Sandwichaufbau wird üblicherweise in einem Zwischenschritt beschnitten, sodass die Außenkontur im Wesentlichen der Kontur des fertigen Erzeugnisses entspricht. Dabei können gewisse Bereiche der ersten oder zweiten Lage die finale Kontur des Dekorteils überragen und zur Positionierung bzw. Halterung bei dem nachfolgenden Hinterspritzen dienen. Vordem Hinterspritzen wird der zunächst ebene Sandwichaufbau umgeformt, sodass die Kontur des Sandwichs der dreidimensionalen Kontur des herzustellenden Dekorteils entspricht. Danach wird die rückseitige Verstärkungslage durch schmelzflüssiges Anordnen eines Kunststoffs gegen eine Rückseite der zweiten Lage ausgebildet und mit der zweiten Kaschierung verbunden, und zwar im Wege des Spritzgießens.

Bevorzugt wird das Verfahren so durchgeführt, dass die in einem zweiten Kaschierungsschritt eingebrachte Wärme die erste Kaschierung auf eine Temperatur bringt, die nicht kleiner als die maximale Temperatur in der ersten Kaschierung während des ersten Kaschierungsschrittes ist. Diese Weiterbildung lässt sich von der Überlegung leiten, dass bis zur vollständigen Kaschierung sämtlicher Lagen die zeitlich vorgelagerte Kaschierung zunächst unvollständig erfolgen kann in dem Sinne, dass ein zeitlich nachgeordneter Kaschierungsschritt zu einer anderen Kaschierung auch die Haftung zwischen der zeitlich früher an die dieser zugeordneten Lage angebundenen Kaschierung und dieser Lage verbessert.

Im Hinblick auf eine ökonomische Verfahrensführung sollte in gleicher Weise auch die Presszeit bzw. der Pressdruck angewandt werden. So sollte für den zeitlich nachfolgenden Kaschierungsschritt die Presszeit länger als die in dem zeitlich vorangegangenen Kaschierungsschritt angewandte Presszeit sein. Als Presszeit ist diejenige Zeit zu verstehen, in welcher die Kaschierung unter Druck an die zugeordnete Lage angelegt wird. Die erste Presszeit ist dementsprechend diejenige Zeit, während welcher die erste Lage unter Druck gegen die erste Kaschierung angelegt wird. Während dieser Zeit wirkt üblicherweise auch die Prozesswärme an der Phasengrenze zwischen der ersten Kaschierung und der ersten Lage. Der in dem ersten Kaschierungsschritt angewandte Pressdruck muss nicht notwendigerweise geringer als der Pressdruck des zweiten Kaschierungsschrittes sein. Der Pressdruck sollte aber gegenüber dem in einem zeitlich vorangehenden Kaschierungsschritt angewandten Druck nicht abfallen.

Die vorliegende Erfindung lässt sich auch auf mehrschichtige Kaschierungen anwenden, deren einzelne Schichten zeitlich aufeinander folgend miteinander und mit unterschiedlichen Lagen verbunden werden. So kann die einer ersten Lage zugeordnete Schicht der Kaschierung als erste Kaschierung im Sinne der vorliegenden Erfindung angesehen werden, wohingegen die flächig gegen diese erste Kaschierung angelegte zweite Schicht als zweite Kaschierung im Sinne der vorliegenden Erfindung betrachtet werden kann. Diese zweite Kaschierung wird in dem zweiten Kaschierungsschritt üblicherweise direkt mit der zweiten Schicht verbunden. Die hierbei angewandte Prozessenergie verbessert auch die Haftung zwischen der ersten Schicht, d.h. ersten Kaschierung, und der ersten Lage.

Die nachstehend diskutierten Vorteile der Erfindung in Bezug auf Kaschierungen auf unterschiedlichen Oberflächen einer einzigen Lage gelten auch für die zuvor beschriebene Besonderheit. Gleichwohl ist es in der Praxis zu bevorzugen, mehrschichtige Kaschierungen zunächst separat zu den entsprechenden Lagen vorzubereiten und als Mehrschicht-Kaschierung mit einer der Lagen zu verbinden. In diesem Fall wird die zweite Lage vor dem zweiten Kaschierungsschritt unter Zwischenlage der ersten Kaschierung gegen die erste Lage angelegt. Auf der der ersten Lage gegenüberliegenden Seite der zweiten Lage wird in dem zweiten Kaschierungsschritt die zweite Kaschierung mit der zweiten Lage verbunden. Die hierbei wirkende Prozessenergie wirkt auch auf die Phasengrenzen zwischen der ersten Lage, der ersten Kaschierung und der Phasengrenze zwischen der ersten Kaschierung und der Oberfläche der zweiten Lage. So wird in dem zweiten Kaschierungsschritt nicht nur die zweite Kaschierung mit der zweiten Lage verbunden. Vielmehr wird auch die Haftung zwischen der ersten Lage und der zweiten Lage unter Vermittlung der ersten Kaschierung verbessert.

Im Hinblick auf eine möglichst schonende Verarbeitung insbesondere von Furnieren als Lage des Dekorteils ist es zu bevorzugen, im Rahmen der Herstellung des Dekorteils die maximale Temperatur in jeder Kaschierung höher als die maximale Temperatur der sichtseitig vorgelagerten Kaschierung einzustellen. Diese Weiterbildung lässt sich von der Überlegung leiten, dass die sichtseitig vordere Lage durch ein Furnier gebildet ist und dass im Rahmen der Herstellung des Dekorteils die rückseitig mit der Dekorlage verbundene Kaschierung auf eine geringere Temperatur gebracht wird, als die sichtseitig weiter beabstandeten Kaschierungen. So kann das Furnier schonender mit der dem Furnier hinterlegten Kaschierung verbunden werden, als die unter Haftvermittlung dieser Kaschierung vorgesehene Lage mit der ihr zugeordneten, regelmäßig gegenüberliegend zu dem Furnier vorgesehenen Kaschierung. In diesem Fall stellt das Furnier die erste Lage dar, wohingegen die unter Vermittlung der ersten Kaschierung daran angebundene Lage die zweite Lage im Sinne der vorliegenden Erfindung darstellt.

Die vorliegende Erfindung lässt sich von der Vorstellung leiten, dass die maximalen Temperaturen in der jeweiligen Kaschierung kontrolliert werden sollten. Aufgrund von Wärmeleitvorgängen kann es sein, dass diese maximale Temperatur tatsächlich erst nach Beendigung eines Kaschierungsschrittes gemessen werden kann. Die zeitliche Durchführung des Kaschierungsschrittes und das Messen der maximalen Temperatur können dementsprechend zeitlich auseinanderfallen.

Im Hinblick auf eine möglichst ressourcenschonende Herstellung nimmt der Anpressdruck jedenfalls zwischen aufeinanderfolgenden Kaschierungsschritten nicht ab. Er mag konstant bleiben. Vielmehr aber wird das Verfahren bevorzugt so durchgeführt, dass der in einem nachgelagerten Kaschierungsschritt angewandte Pressdruck höher als der in dem unmittelbar vorangegangenen Kaschierungsschritt ist. In entsprechender Weise werden auch die Presszeiten eingestellt. Dabei wird erst nach dem letzten Kaschierungsschritt eine Haftung zwischen den einzelnen Kaschierungen und den ihnen zugeordneten Lagen erreicht, die die praktischen Anforderungen erfüllt. Der erste Kaschierungsschritt dient lediglich dem Anhaften der ersten Kaschierung an die zugeordnete Lage. Die in den folgenden Kaschierungsschritten aufgewandte Prozessenergie verbessert diese Haftung dort.

Gemäß einer bevorzugten Weiterbildung der vorliegenden Erfindung bilden die erste und/oder die zweite Lage die sichtseitige Dekorfläche des Dekorteils aus. Diese sichtseitige Dekorfläche kann mit einem transparenten Überzug versehen sein. Dementsprechend muss die Oberfläche der ersten und/oder zweiten Lage nicht notwendigerweise auch die Außenfläche des Dekorteils ausbilden. Wohl aber wird ganz überwiegend die ästhetische Anmutung des Dekorteils durch die Oberfläche der ersten und/oder zweiten Lage bestimmt.

Gemäß einer bevorzugten Weiterbildung der vorliegenden Erfindung wird die rückseitige Verstärkungslage durch schmelzflüssiges Anordnen eines Kunststoffs gegen eine Rückseite der ersten und/oder der zweiten Lage ausgebildet. Sofern die erste Lage zumindest ganz überwiegend die sichtseitige Dekorfläche des Dekorteils bestimmt, wird der schmelzflüssige Kunststoff rückseitig gegen die zweite Lage angelegt. Dies kann durch Anspritzen oder Aufschäumen, regelmäßig in einer in sich geschlossenen Kavität erfolgen. Der hierbei wirkende Druck und die Temperatur verbessern die Haftung des Kunststoffes an der zweiten Lage, die rückseitig mit der zweiten Kaschierung versehen ist, wobei die zweite Kaschierung die Haftvermittlung zwischen dem Kunststoff und der zweiten Lage bewirkt. Alternativ kann die Verstärkungslage auch durch Press- und/oder Gießverfahren, beispielsweise drucklose Gießverfahren, ausgebildet werden.

Gemäß einer bevorzugten Weiterbildung der vorliegenden Erfindung wird die erste Lage nach dem Aufbringen der ersten Kaschierung mit zumindest einer Durchbrechung versehen. Diese Durchbrechung durchsetzt die erste Lage und die Kaschierung. Ein beim Ausbilden der Verstärkungslage an der Rückseite der zweiten Lage wirkender Formnestdruck drängt einen Bereich der zweiten Lage, die sich an der Rückseite der ersten Lage befindet, in die zumindest eine Durchbrechung. Damit kann ein Dekorteil erhalten werden, bei dem Flächenabschnitte der ersten und der zweiten Lage sichtseitig nebeneinander und im Wesentlichen höhengleich angeordnet werden, wie dies DE 10 2012 016 147 A1 der vorliegenden Anmelderin beschreibt.

Die Durchbrechung bzw. die mehreren Durchbrechungen werden dabei bevorzugt an dem Sandwichaufbau ausgespart. Dabei kann beispielsweise durch Laserschneiden die erste Lage und die daran vorgesehene erste Kaschierung durchsetzt, nicht aber die zweite Lage beschnitten werden. Dies lässt sich durch die Wellenlänge oder Leistung des Lasers steuern, insbesondere dann, wenn die erste Lage aus einem Furnier und die zweite Lage beispielsweise aus einer Metallfolie, beispielsweise Aluminium gebildet ist.

Auch bei der Durchführung des erfindungsgemäßen Verfahrens kann in dem jeweiligen Kaschierungsschritt die Kaschierung mittels Flachbett, Kalander, Walzen, Rollen oder einer Kombination dieser Mittel aufgebracht werden. Im Falle einer Kaschierung aus einer mehrschichtigen Folie sollten die beiden Schichten aus zumindest zwei unterschiedlichen Polymeren gebildet sein. Die Schichten der einzelnen Mehrschichtfolie sollten zwischen 10 und 150 µm, vorzugsweise zwischen 40 und 60µm liegen. Im Falle einer Kaschierung aus einer mehrschichtigen Folie sollten die mindestens zwei Schichten aus zumindest zwei unterschiedlichen Polymeren gebildet sein.

Als Lage im Sinne der vorliegenden Erfindung wird insbesondere eine Lage mit einer Stärke von 0,05 bis 0,5, bevorzugt 0,05 bis 0,15 mm, insbesondere 0,1 mm angesehen. Letztere Maße gelten insbesondere für eine die Lage ausbildende Metallfolie. Im Falle einer Lage, die durch ein Holzfurnier gebildet ist, sollte diese eine Stärke von zwischen 0,1 und 0,5 mm, bevorzugt 0,22 und 0,28 mm, insbesondere 0,25 mm haben. Dabei wird die Metallfolie bevorzugt durch Vermittlung der ersten Kaschierung mit der Furnierlage verbunden, wohingegen die Metallfolie selbst rückseitig mit einer zweiten Kaschierung verbunden wird, um beispielsweise unmittelbar einen thermoplastischen Kunststoff durch Hinterspritzen mit der Folie verbunden zu werden. Bei der Herstellung dieser spezifischen Ausgestaltung wird zunächst in einem ersten Kaschierungsschritt die erste Kaschierung mit der Furnierlage verbunden. In einem zweiten Kaschierungsschritt wird die Folie rückseitig mit einer zweiten Kaschierung verbunden. Dabei wird die Folie bereits im Rahmen des zweiten Kaschierungsschrittes unter Zwischenlage der ersten Kaschierung gegen die Rückseite der ersten Kaschierung angelegt, sodass die in dem zweiten Kaschierungsschritt aufgewandte Prozessenergie auch bis in die erste Kaschierung gelangt und er Sandwichaufbau erhalten wird.

Gemäß einer bevorzugten Weiterbildung der vorliegenden Erfindung wird in dem ersten Kaschierungsschritt eine zweischichtige erste Kaschierung verwendet. Dabei wird die erste Lage mit einer gegen die erste Lage angelegten ersten Kaschierungsschicht der ersten Kaschierung verbunden. In einem zweiten Kaschierungsschritt wird die zweite Lage an ihrer der ersten Lage zugewandten Seite mit einer gegen die zweite Lage angelegten ersten Kaschierungsschicht der ersten Kaschierung und an ihrer der ersten Lage abgewandten Seite mit der zweiten Kaschierung verbunden. Die beiden Schichten der ersten Kaschierung sind dabei auf die jeweiligen Kaschierungsschritte angepasst. So wird in dem ersten Kaschierungsschritt vorzugsweise die gegen die erste Lage angelegte erste Kaschierungsschicht aufgeschmolzen bzw. aktivitiert. Das Aufschmelzen erfolgt insbesondere bei einem thermoplastischen Kaschierungsmaterial. Das Aktivieren erfolgt bei einem vernetzenden Kaschierungsmaterial. In dem ersten Kaschierungschritt wird aber nicht die gegen die zweite Lage anzulegende Kaschierungsschicht der ersten Kaschierung aufgeschmolzen bzw. aktiviert. Dies erfolgt erst in dem zweiten Kaschierungsschritt. Zur verbesserten Haftung der unterschiedlichen Lagen aneinander ist es zu bevorzugen, die an die erste Lage angelegte erste Kaschierungsschicht durch ein thermoplastisches Material auszubilden und die gegen die zweite Lage anzulegende erste Kaschierungsschicht aus einem vernetzenden Material auszubilden. Dieses Material ist bevorzugt identisch mit demjenigen Material, das auf der der ersten Lage abgewandten Seite der zweiten Lage gegen diese zweite Lage kaschiert wird. Auch hier kann die Kaschierung zweilagig sein, um einerseits in dem zweiten Kaschierungsschritt bestmöglich an die zweite Lage anzubinden und andererseits eine möglichst gute Anbindung des die Verstärkungslage ausbildenden Kunststoffs zu erreichen. Dies lässt sich beispielsweise auch dadurch erreichen, dass die zweite Kaschierungsschicht durch ein in Richtung auf die zweite Lage durchtränktes Vlies gebildet ist, welches aber auf der gegenüberliegenden Seite noch faserig und nicht von dem Kaschierungsmaterial durchtränkt ist, sodass dieses zumindest teilweise von dem schmelzflüssigen Kunststoff durchsetzt werden kann, der damit im Grunde formschlüssig verbindet.

Grundsätzlich können die Lagen jeder Kaschierungsschicht für sich jeweils aus einem Thermoplasten oder jeweils aus einem sich vernetzenden Material ausgebildet sein. Verschiedene Lagen einer einzigen Kaschierungsschicht Können auch aus unterschiedlichen, die Haftung vermittelnden Kaschierungsmaterialien, insbesondere einerseits einem Thermoplasten und andererseits einem sich vernetzenden Material ausgebildet sein. Bevorzugt binden an gegenüberliegenden Seiten einer Dekorlage des Dekorteils die gleichen, die Haftung vermittelnden Materialien der Kaschierungsschicht an. Die Dekorlage ist dabei Lage gemäß Anspruch 1, d.h. Eine den strukturellen Aufbau definierende und bestimmende Lage des Dekorteils, an der die Kaschierungsschicht anhaftet.Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Figur 1: eine schematische Schnittansicht eines Aufbaus eines ersten Ausführungsbeispiels eines Dekorteils in Explosionsdarstellung;
- Figur 2: eine schematische Schnittansicht eines Aufbaus eines zweiten Ausführungsbeispiels eines Dekorteils in Explosionsdarstellung;
- Figuren 3a bis 3d: schematische Schnittansichten zu Verfahrensschritten bei der Herstellung eines dritten Ausführungsbeispiels eines Dekorteils gemäß der vorliegenden Erfindung.

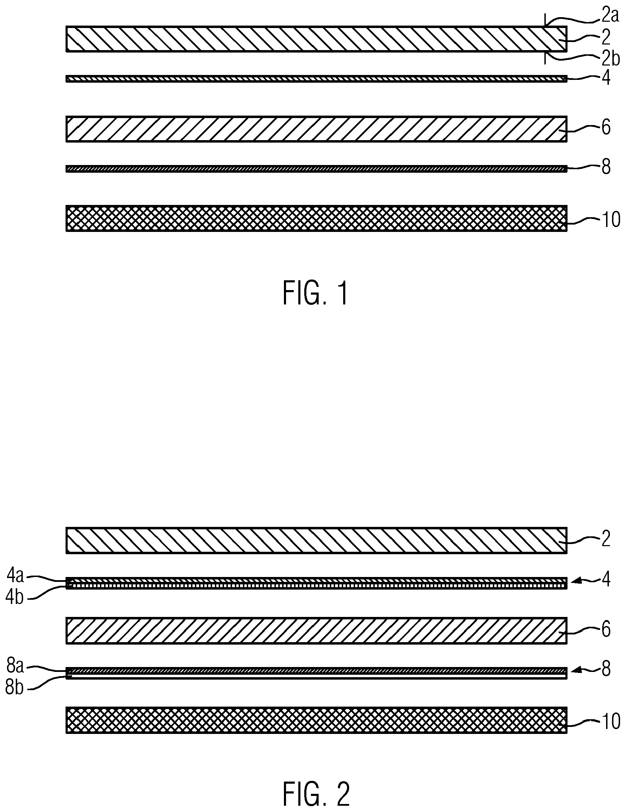

Die Figur 1 zeigt verschiedene Schichten eines schematisch dargestellten Ausführungsbeispiels eines Dekorteils, wobei eine mit Bezugszeichen 2 gekennzeichnete Lage eine sichtseitige Oberfläche 2a ausbildet, die mit einer nicht dargestellten transparenten Schicht als Überzug versehen sein kann. Gegenüberliegend zu der sichtseitigen Oberfläche 2a befindet sich eine erste Kaschierung 4, die in einem ersten Kaschierungsschritt mit einer rückseitigen Oberfläche 2b der ersten Lage verbunden wird. In einer Draufsicht auf die erste Lage hinter der ersten Kaschierung 4 befindet sich eine zweite Lage 6. In Sichtrichtung dahinter befindet sich eine zweite Kaschierung 8. Mit Bezugszeichen 10 ist eine rückseitige Verstärkungslage gekennzeichnet.

Bei dem fertig hergestellten Dekorteil sind sämtliche in Figur 1 dargestellte Schichten miteinander verbunden. Bei dem Herstellungsverfahren wird zunächst die erste Kaschierung 4 in einem ersten Kaschierungsschritt mit der ersten Lage 2 verbunden. Danach wird die zweite Lage 6 zusammen mit der zweiten Kaschierung 8 rückseitig gegen die erste Kaschierung 6 angelegt. In einem zweiten Kaschierungsschritt wird die zweite Kaschierung 8 mit der zweiten Lage 6 verbunden.

Die erste Kaschierung 4 wird mit der zweiten Kaschierung 2 unter Anwendung von Druck und Wärme über eine vorbestimmte Zeit, im Folgenden Presszeit verbunden. Der hierbei angewandte Pressdruck sei P1; die hierbei wirkende Temperatur sei T1; die Presszeit sei t1.

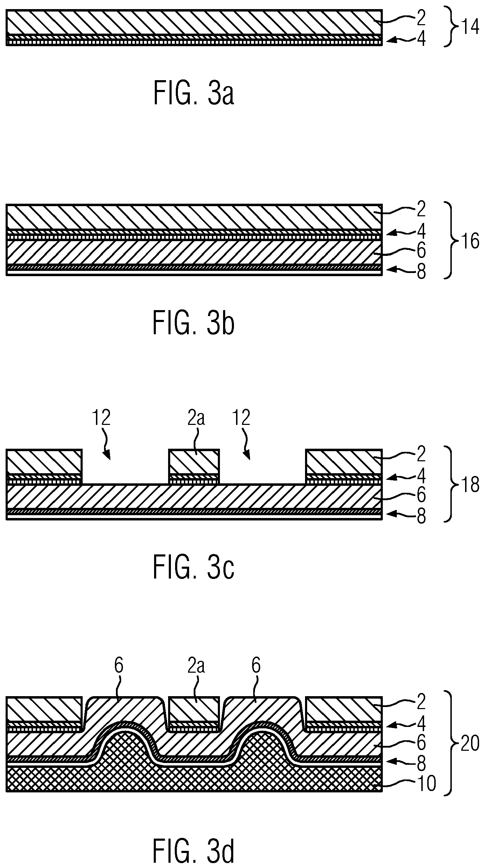

In dem ersten Kaschierungsschritt kann diese über die Presszeit t1 eingebracht Prozessenergie beispielsweise durch Flachbett-Kaschieren eingebracht werden. Nach der Stabilisierung der ersten Lage 2, die beispielsweise ein Furnier sein kann, durch die erste Kaschierung 4 wird die Kombination aus erster Lage 2 und erster Kaschierung 4 bearbeitet. So kann das Furnier 2 geschliffen, geschnitten und/oder mit Durchbrechungen 12 versehen werden (vgl. Figur 3b). Die erste Kaschierung 4 wirkt dabei nicht nur als Haftvermittler, sondern auch als Verstärkungslage, welche das relativ dünne Furnier 2 stützt und im Rahmen der nachfolgenden Bearbeitung vor Beschädigung schützt.

Nach der Bearbeitung der ersten Lage 2 zusammen mit der ersten Kaschierung 4 wird die zweite Lage 6 gegen die Rückseite der ersten Kaschierung 4 angelegt und gleichzeitig gegen die Rückseite der zweiten Lage 6 die zweite Kaschierung 8 angelegt. Diese zweite Kaschierung 8 dient als Haftvermittler für das spätere Anspritzen der rückseitigen Verstärkungslage 10, die vorliegend aus einem Thermoplasten gebildet ist und im Wegen des Hinterspritzens des aus den Lagen 2, 6 und den Kaschierungen 4, 8 gebildeten Zwischenerzeugnisses ausgeformt wird.

Im Rahmen des zweiten Kaschierungsschrittes wird durch eine erwärmte Platte, die gegen die Rückseite der zweiten Kaschierung 8 angelegt wird, diese Kaschierung 8 mit der zweiten Lage 6 verbunden. Die durch diese dabei in das Zwischenerzeugnis eingebrachte Wärme wird durch die zweite Kaschierung 8 und die zweite Lage 6 hindurch Wärme und Druck in Richtung auf die erste Kaschierung 4 und die erste Lage 2 geleitet. Die Wärme führt auch dort zu einer Erwärmung. Für den Fall, dass die Kaschierung 4 bzw. 8 aus einem beidseitig beleimten Vlies besteht, wird durch diese Wärme der Leim sowohl der ersten Kaschierung 4 als auch der zweiten Kaschierung 8 vernetzt. Eine in dem ersten Kaschierungsschritt bereits bewirkte Teilvernetzung der ersten Kaschierung 4 zum Verbinden gegen die erste Lage 2 wird dementsprechend vervollständigt. Die Vernetzung bewirkt auch eine Haftung gegenüber der ersten Kaschierung 4 und der zweiten Lage 6. Dabei kann das Verfahren so durchgeführt werden, dass die im Rahmen des ersten Kaschierungsschrittes eingebrachte Erwärmung der ersten Lage 2 und der ersten Kaschierung 4 sich noch als Temperaturerhöhung in diesen beiden Schichten 2, 4 zeigt, sodass die im ersten Kaschierungsschritt eingebrachte Prozessenergie nicht vollends verloren gegangen ist, wenn in dem zweiten Kaschierungsschritt weitere Prozessenergie in den Schichtaufbau eingebracht wird.

Die Temperatur der zweiten Kaschierung 8 sei T2; der Druck bei dem zweiten Kaschierungsschritt sei P2; die Presszeit für den zweiten Kaschierungsschritt sei t2. Es gilt T2 ≥T1; t2 ≥ t1; P2 ≥ P1.

Dabei bezieht sich T1 auf die Temperatur der ersten Kaschierung 4 im ersten Kaschierungsschritt und T2 auf die Temperatur der zweiten Kaschierung 8 im zweiten Kaschierungsschritt. Dieser zweite Kaschierungsschritt führt zu einer Temperaturerhöhung im Bereich der ersten Kaschierung 4. Die Temperatur der ersten Kaschierung 4 während des zweiten Kaschierungsschrittes sei T1.2. Im Rahmen des zweiten Kaschierungsschrittes ergibt sich eine Temperaturerhöhung der ersten Kaschierung 4. Dadurch steigt die Temperatur der ersten Kaschierung 4 im Rahmen des zweiten Kaschierungsschrittes an. Die maximale Temperatur T1.2 liegt üblicherweise über der maximalen Temperatur T1, also der Temperatur der ersten Kaschierung 4 im ersten Kaschierungsschritt. Allerdings sollte das Verfahren so durchgeführt werden, dass auch im zweiten Kaschierungsschritt die Temperatur T1.2 jederzeit geringer als die Temperatur T2 ist. Dies kann dadurch erreicht werden, dass die die erste Lage außenseitig beim Kaschieren abstützende Oberfläche eine geringere Temperatur hat als die gegen die zweite Kaschierung 8 wirkende Oberfläche. Üblicherweise wird der jeweilige Schichtaufbau in den einzelnen Schritten für sich auf eine einheitliche Temperatur erwärmt. Die erste Temperatur ist üblicherweise so gewählt, dass die erste Kaschierung an die erste Lage zumindest angeheftet wird. In dem nachfolgenden zweiten Schritt wird die erste Kaschierung endvernetzt oder nahezu endvernetzt, wenn dieser zweite Schritt der letzte Kaschierungsschritt ist.

Die Figur 2 zeigt einen ähnlichen Aufbau eines Dekorteils. Gleiche Komponenten sind mit gleichen Bezugszeichen versehen. Die jeweiligen Kaschierungen sind durch einen Zweischichtaufbau gebildet. So hat die erste Kaschierung 4 eine sichtseitige Schicht 4a und eine rückseitige Schicht 4b. Die sichtseitige Schicht 4a ist im Hinblick auf eine gute Haftungseigenschaft mit der ersten Lage 2 angepasst ausgebildet. Die rückseitige Schicht 4b hat an die zweite Lage 6 angepasst ausgebildete Haftungseigenschaften. Bei der mehrschichtigen ersten Kaschierung 4 handelt es sich um eine zweilagige Kunststofffolie, die aus zwei polymeren Schichten gebildet ist.

In entsprechender Weise ist auch die zweite Kaschierung 8 aufgebaut. Die sichtseitige Schicht 8a hat zu der zweiten Lage 6 angepasst ausgebildete Haftungseigenschaften. Die rückseitige Schicht 8b hat Haftungseigenschaften, zur bestmöglichen Haftung gegenüber der Verstärkungslage 10.

Auch eine Kombination der ersten und zweiten Kaschierung aus einer einlagigen (vgl. Fig. 1) und einer mehrlagigen (vgl. Fig. 2) Kaschierung sind möglich und denkbar.

Die Figur 3 a zeigt in einer Querschnittsansicht eine erste Lage 2, die vorliegend als Dekorlage in Gestalt eines Furniers mit einer Stärke von zwischen 0,1 bevorzugt 0,5 und 0,9 mm ausgeformt ist.

Die erste Lage 2 ist mit einer ersten Kaschierung 4 verbunden, die an die Rückseite der ersten Lage 2 durch Anwendung von Wärme und Druck so weit kaschiert worden ist, dass die Kaschierung an der Dekorlage zumindest angeheftet und damit positioniert ist.

Die bereits zuvor diskutierten Durchbrechungen 12 werden aus dem Schichtverbund aus der Dekorlage 2 und der Kaschierung 4 ausgestanzt.

Die erste Dekorlage 2 kann für sich oder zusammen mit der ersten Kaschierung 4 durch Schneiden auf Form gebracht und geschliffen und auf besagte Dicke kalibriert, gegebenenfalls auf Maß gebracht beziehungsweise mit Haltelöchern versehen werden, um die erste Dekorlage 2 an Stiften eines Spritzgießwerkzeugs zu positionieren und zu halten. Durch Aufbringen von Druck und Temperatur kann die erste Dekorlage 2 zu einem dreidimensionalen Preform umgebildet, um beispielsweise an der Sichtseite eine leichte Konturierung und/oder in den äußeren Zonen der Dekorlage 2 einen umbogenen, gegebenenfalls umlaufenden Rand herzustellen. Auch diese Behandlung kann mit der an der Rückseite der Lage 2 vorgesehenen Kaschierung 4 durchgeführt werden. Die dabei wirkende Wärme kann entweder die Kaschierung 4 mit der Rückseite der Lage 2 erstmalig verbinden oder aber einen bereits erzeugten vorläufigen Verbund zwischen der Kaschierung 4 und der Lage 2 durch Erhöhen des Vernetzungsgrades innerhalb der Kaschierung 4 verbessern.

Auch kann die erste Dekorlage 2 durch Aufsprühen einer Beize oder Kugelstrahlen oberflächenbehandelt sein.

Vorliegend hat die Dekorlage 2 mehrere separate inselförmige Dekorelemente, von denen lediglich eines gezeigt und mit Bezugszeichen 2a gekennzeichnet ist, die jeweils unabhängig und ohne Verbindung zueinander vorgesehen, jedoch jeweils mit der Kaschierung 4 versehen sind. Die Durchbrechungen 12 durchsetzen sowohl die Lage 2 als auch die Kaschierung 4.

Gegen diesen in Figur 3a gezeigten Schichtverbund 14 wird die zweite Lage 6, die beispielsweise eine Kunststoff- oder Metallfolie sein kann, angelegt, die ihrerseits mit der zweiten Kaschierung 8 versehen wird.

Die in diesem zweiten Kaschierungsschritt einwirkende Wärme und der dabei einwirkende Druck bewirkt das Kaschieren der zweiten Kaschierung 8 gegen die Rückseite der zweiten Lage 6, führt aber auch zu einer weiteren oder vollständigen Vernetzung der ersten Kaschierung 4 und damit zum Abbinden der ersten Kaschierung 4 gegen die Rückseite der ersten Lage 2 einerseits und gegen die sichtseitige Oberfläche der zweiten Lage 6 andererseits.

Nach dem Kaschieren wird der in Figur 3b mit Bezugszeichen 16 gekennzeichnete Sandwichaufbau erhalten. An diesem werden bevorzugt die Durchbrechungen 12 durch Laserschneiden vor oder nach dem Umformen des Sandwichaufbaus zur Schaffung eines dreidimensionalen Formteils ausgeformt.

In solcher Weise vorbereitet wird das in Figur 3c gezeigte weitere Zwischenerzeugnis 18 in eine Werkzeughälfte eines Spritzgießwerkzeugs eingelegt und dort positioniert. Dabei liegt eine sichtseitige Oberfläche der ersten Lage 2 gegen eine die Kavität begrenzende Oberfläche des Spritzgießwerkzeugs an, die sichtseitige Oberfläche der zweiten Lage 6 liegt mit Abstand und parallel zu dieser die Kavität begrenzenden Oberfläche, wohingegen eine Rückseite, die ausschließlich durch die zweite Kaschierung 8 gebildet wird, in dem Formnest freiliegt und dieses begrenzt.

In das Formnest wird nunmehr eine Kunststoffkomponente gespritzt, die an der Rückseite der zweiten Kaschierung 8 die Verstärkungslage 10 ausformt. Durch das Hinterspritzen der Verstärkungslage 10 ist diese mit der Rückseite der der zweiten Kaschierung 8 verbunden.

Aufgrund des wirkenden Einspritzdruckes und des Nachdrucks beim Erstarren der Kunststoffkomponente wird das in Figur 3c gezeigte Zwischenerzeugnis 18 verformt. Dabei drückt sich die zweite Lage 6 in die Durchbrechungen 12, so dass die sichtseitige Oberfläche der zweiten Lage 6 bündig zu der sichtseitigen Oberfläche der ersten Lage 2 angeordnet wird. In dieser Weise erstarrt der Kunststoff der Verstärkungslage 10, sodass das in Figur 3d gezeigte Dekorteil 20 als Erzeugnis formstabil erhalten wird.

Nun kann an der Sichtseite dieses Dekorteils 20 ein transparenter oder transparent eingefärbter Überzug vorgesehen werden, um das Erzeugnis sichtseitig vor Umwelteinflüssen oder Kratzern zu schützen. Dies kann beispielsweise in einem Wendewerkzeug erfolgen, das das in Figur 3d gezeigte Erzeugnis umsetzt, um an der Sichtseite eine durch Überspritzen, vorliegend mit einem transparenten Thermoplasten wie PMMA, hergestellte Beschichtung aufzubringen.

Die in jedem Spritzgießzyklus eingebrachte Energie in Form von Druck und Wärme kann bei der Optimierung der Verfahrensparameter im Hinblick auf ein möglichst ressourcenschonendes Vorgehen in Betracht gezogen werden. Das Verfahren kann so durchgeführt werden, dass sämtliche Kaschierungen erst nach dem letzten oder einzigen Umspritzen den für das Enderzeugnis geforderten Vernetzungsgrad haben. So lassen sich die vorherigen Kaschierungsschritte unter Einsparung von Energie durchführen, gleichwohl aber ein fertiges Erzeugnis herstellen, welches den geforderten Anforderungen genügt.

Bei dem gezeigten Ausführungsbeispiel wird die erste Kaschierung 4 mit einer Temperatur von zwischen 100°C und 140°C bei einer Einwirkzeit von etwa 30 bis 40 Sekunden kaschiert. In dem zweiten Kaschierungsschritt erfolgt die Verbindung zwischen der zweiten Lage 6 und der ersten Lage 2 bei Temperaturen von zwischen 160°C und 190°C bei einer Einwirkdauer von etwa 100 bis 140 Sekunden. Unter diesen Bedingungen wird auch die zweite Kaschierung 8 rückseitig gegen die zweite Lage 6 angelegt.

### Bezugszeichenliste

- 2: erste Lage
- 2a: inselförmiges Dekorelement
- 4: erste Kaschierung
- 4a: sichtseitige Schicht der ersten Kaschierung
- 4b: rückseitige Schicht der ersten Kaschierung
- 6: zweite Lage
- 8: zweite Kaschierung
- 8a: sichtseitige Schicht der zweiten Kaschierung
- 8b: rückseitige Schicht der zweiten Kaschierung
- 10: Verstärkungslage
- 12: Durchbrechungen
- 14: Schichtverbund
- 16: Sandwichaufbau
- 18: Zwischenerzeugnis
- 20: Dekorteil

## Patentansprüche

1. Verfahren zum Herstellen eines Dekorteils, insbesondere eines Dekorteils für die Kfz-Innenausstattung, mit einer rückseitigen Verstärkungslage (10) und einer sichtseitigen Dekorfläche (2a),
bei dem in einem ersten Kaschierungsschritt eine erste Lage (2) unter Druck und Wärme mit einer ein beleimtes Vlies oder eine Kunststofffolie umfassenden ersten Kaschierung (4) zur Erzeugung eines im wesentlichen ebenen Schichtverbundes (14) verbunden wird, bei dem in einem zweiten Kaschierungsschritt eine zweite Lage (6) unter Druck und Wärme mit einer zweiten Kaschierung (8) verbunden wird,
wobei in dem zweiten Kaschierungsschritt die zweite Lage (6) gegen die erste Kaschierung (4) angelegt wird und die in dem zweiten Kaschierungsschritt eingebrachte Wärme auch in der ersten Kaschierung (4) wirkt, sodass die erste Kaschierung (4) an eine Oberfläche der zweiten Lage (6) anbindet und die zweite Lage (6) über die erste Kaschierung (4) zur Erzeugung eines im wesentlichen ebenen Sandwichaufbaus (16) mit dem Schichtverbund (14) verbunden wird,
wobei die rückseitige Verstärkungslage (10) durch schmelzflüssiges Anordnen eines Kunststoffs gegen eine Rückseite der zweiten Lage (6) ausgebildet und mit der zweiten Kaschierung (8) verbunden wird.

2. Verfahren zum Herstellen eines Dekorteils nach Anspruch 1, **dadurch gekennzeichnet, dass** die in dem zweiten Kaschierungsschritt eingebrachte Wärme die erste Kaschierung auf eine Temperatur bringt, die nicht kleiner als die maximale Temperatur in der ersten Kaschierung in dem ersten Kaschierungsschritt ist.

3. Verfahren zum Herstellen eines Dekorteils nach Anspruch 1 oder 2, **dadurch gekennzeichnet, dass** der in dem zweiten Kaschierungsschritt eingebrachte Pressdruck nicht kleiner als der Pressdruck in dem ersten Kaschierungsschritt ist.

4. Verfahren zum Herstellen eines Dekorteils nach einem der vorherigen Ansprüche, **dadurch gekennzeichnet, dass** die Presszeit des zweiten Kaschierungsschritts nicht kleiner als die Presszeit des ersten Kaschierungsschritts ist.

5. Verfahren zum Herstellen eines Dekorteils nach einem der vorherigen Ansprüche, **dadurch gekennzeichnet, dass** die zweite Lage vor dem zweiten Kaschierungsschritt unter Zwischenlage der ersten Kaschierung gegen die erste Lage angelegt wird.

6. Verfahren zum Herstellen eines Dekorteils nach einem der vorherigen Ansprüche, **dadurch gekennzeichnet, dass** im Rahmen der Herstellung des Dekorteils die maximale Temperatur in jeder Kaschierung bzw. bei einer mehrschichtigen Kaschierung in jeder Schicht nicht höher als die maximale Temperatur in der sichtseitig vorgelagerten Kaschierung oder Schicht ist.

7. Verfahren zum Herstellen eines Dekorteils nach einem der vorherigen Ansprüche, **dadurch gekennzeichnet, dass** im Rahmen der Herstellung des Dekorteils der Pressdruck eines zeitlich nachgelagerten Kaschierungsschrittes nicht kleiner als der Pressdruck eines diesem nachgelagerten Kaschierungsschritt zeitlich unmittelbar nachfolgenden Kaschierungsschrittes ist.

8. Verfahren zum Herstellen eines Dekorteils nach einem der vorherigen Ansprüche, **dadurch gekennzeichnet, dass** im Rahmen der Herstellung des Dekorteils die Presszeit eines zeitlich vorgelagerten Kaschierungsschrittes kürzer als die Presszeit eines diesem vorgelagerten Kaschierungsschritt zeitlich unmittelbar nachfolgenden Kaschierungsschrittes ist.

9. Verfahren zum Herstellen eines Dekorteils nach einem der vorherigen Ansprüche, **dadurch gekennzeichnet, dass** die erste Lage (2) nach dem Aufbringen der ersten Kaschierung (4) mit zumindest einer, die erste Lage (2) und die erste Kaschierung (4) durchsetzenden Durchbrechung (12) versehen wird und dass ein beim Ausbilden der Verstärkungslage (10) an der Rückseite der zweiten Lage (6) wirkender Formnestdruck einen Bereich der an einer Rückseite der ersten Lage (2) vorgesehenen zweiten Lage (6) in die Durchbrechung (12) drängt.

10. Verfahren zum Herstellen eines Dekorteils nach Anspruch 9, **dadurch gekennzeichnet, dass** die Durchbrechung (12) an dem Sandwichaufbau (16) ausgespart wird.

11. Verfahren zum Herstellen eines Dekorteils nach einem der vorherigen Ansprüche, **dadurch gekennzeichnet, dass** in dem ersten Kaschierungsschritt eine zweischichtige erste Kaschierung (4a, 4b) verwendet wird, dass die erste Lage (2) mit einer gegen die erste Lage (2) angelegten ersten Kaschierungsschicht (4a) verbunden wird und dass in einem zweiten Kaschierungsschritt die zweite Lage (6) an ihrer der ersten Lage (2) zugewandten Seite mit einer gegen die zweite Lage (6) angelegten zweiten Kaschierungsschicht (4b) der ersten Kaschierung (4a, 4b) und an ihrer der ersten Lage (2) abgewandten Seite mit der zweiten Kaschierung (8) verbunden wird.

12. Verfahren zum Herstellen eines Dekorteils nach Anspruch 11, **dadurch gekennzeichnet, dass** in dem ersten Kaschierungsschritt die gegen die erste Lage (2) angelegte erste Kaschierungsschicht (4a) aufgeschmolzen oder aktiviert wird, nicht aber die zweite Kaschierungsschicht (4b) der ersten Kaschierung (4a, 4b).

## Claims

1. Method for manufacturing a trim element, in particular a trim element for the automotive interior, with a rear side reinforcement layer (10) and a face side decorative surface (2a);
in which a first layer (2) is bonded under pressure and heat in a first lamination step to a first lamination (4) for producing a substantially planar ply composite (14), said first lamination (4) comprising a nonwoven fabric having adhesive applied thereto or a plastic film,
in which a second layer (6) is bonded under pressure and heat in a second lamination step to a second lamination (8),
where in the second lamination step, said second layer (6) is abutted against said first lamination (4) and the heat introduced in said second lamination step also acts in said first lamination (4), so that said first lamination (4) bonds to a surface of said second layer (6) and said second layer (6) is bonded to said ply composite (14) via said first lamination (4) to produce a substantially planar sandwich structure (16),
where said rear side reinforcement layer (10) is formed by the fused arrangement of a plastic material against a rear side of said second layer (6) and bonded to said second lamination (8).

2. Method for manufacturing a trim element according to claim 1, **characterized in that** the heat introduced in said second laminating step takes said first lamination to a temperature not less than the maximum temperature in said first lamination in said first lamination step.

3. Method for manufacturing a trim element according to claim 1 or 2, **characterized in that** the pressing pressure introduced in said second lamination step is not less than the pressing pressure in said first lamination step.

4. Method for manufacturing a trim element according to one of the preceding claims, **characterized in that** the pressing time of said second lamination step is not less than the pressing time of said first lamination step.

5. Method for manufacturing a trim element according to one of the preceding claims, **characterized in that** said second layer is abutted against said first layer with the interposition of said first lamination prior to said second lamination step.

6. Method for manufacturing a trim element according to one of the preceding claims, **characterized in that**, in the context of manufacturing said trim element, the maximum temperature in each lamination, or with a multi-ply lamination in each ply, is not higher than the maximum temperature in the lamination or ply preceding on the face side.

7. Method for manufacturing a trim element according to one of the preceding claims, **characterized in that**, in the context of manufacturing the trim element, the pressing pressure of a temporally subsequent lamination step is not less than the pressing force of a temporally immediately subsequent lamination step subsequent to this lamination step.

8. Method for manufacturing a trim element according to one of the preceding claims, **characterized in that**, in the context of manufacturing said trim element, the pressing time of a temporally preceding lamination step is shorter than the pressing time of a temporally immediately subsequent lamination step preceding this lamination step.

9. Method for manufacturing a trim element according to one of the preceding claims, **characterized in that** said first layer (2) after application of said first lamination (4) is provided with at least one through-hole (12) penetrating said first layer (2) and said first lamination (4) and that a cavity pressure acting when forming said reinforcement layer (10) on said rear side of said second layer (6) presses a region of said second layer (6), which is located on a rear side of said first layer (2), into said through-hole (12).

10. Method for manufacturing a trim element according to claim 9, **characterized in that** said through-hole (12) is recessed in said sandwich structure (16).

11. Method for manufacturing a trim element according to one of the preceding claims, **characterized in that** a two-ply first lamination (4a, 4b) is used in the first lamination step, that said first layer (2) is bonded to a first lamination ply (4a) that is abutted against said first layer (2) and that, in a second lamination step, said second layer (6) on its side facing said first layer (2) is bonded to a second lamination ply (4b) of the first lamination (4a, 4b) abutted against said second layer (6) and on its side facing away from said first layer (2) to said second lamination (8).

12. Method for manufacturing a trim element according to claim 11, **characterized in that**, in the first lamination step, said first lamination ply (4a) abutted against the first layer (2) is fused or activated, but not said second lamination ply (4b) of said first lamination (4a, 4b).

## Revendications

1. Procédé de fabrication d'une pièce décorative, en particulier d'une pièce décorative pour l'équipement intérieur d'un véhicule automobile, comprenant une couche de renforcement (10) située sur la face arrière et une surface décorative (2a) située du côté visible,
dans lequel, lors d'une première étape de doublage, une première couche (2) est liée sous pression et à chaud à une première doublure (4) comprenant une nappe collée ou un film plastique, afin de produire un stratifié (14) essentiellement plan,
dans lequel, lors d'une seconde étape de doublage, une seconde couche (6) est liée sous pression et à chaud à une seconde doublure (8),
dans lequel, lors de la seconde étape de doublage, la seconde couche (6) est appliquée contre la première doublure (4) et la chaleur introduite lors de la seconde étape de doublage agit également au sein de la première doublure (4) de sorte que la première doublure (4) se lie au niveau d'une surface de la seconde couche (6) et la seconde couche (6) est liée au stratifié (14) par l'intermédiaire de la première doublure (4) afin de produire une structure en sandwich (16) essentiellement plane, dans lequel la couche de renforcement (10) située sur la face arrière est formée par agencement à l'état de fusion d'une matière plastique contre une face arrière de la seconde couche (6) et est reliée à la seconde doublure (8).

2. Procédé de fabrication d'une pièce décorative selon la revendication 1, **caractérisé en ce que** la chaleur introduite lors de la seconde étape de doublage porte la première doublure à une température qui n'est pas inférieure à la température maximale au sein de la première doublure lors de la première étape de doublage.

3. Procédé de fabrication d'une pièce décorative selon la revendication 1 ou 2, **caractérisé en ce que** la pression de compression appliquée lors de la seconde étape de doublage n'est pas inférieure à la pression de compression appliquée lors de la première étape de doublage.

4. Procédé de fabrication d'une pièce décorative selon l'une quelconque des revendications précédentes, **caractérisé en ce que** le temps de compression de la seconde étape de doublage n'est pas inférieur au temps de compression de la première étape de doublage.

5. Procédé de fabrication d'une pièce décorative selon l'une quelconque des revendications précédentes, **caractérisé en ce que** la seconde couche est appliquée contre la première couche avant la seconde étape de doublage avec interposition de la première doublure.

6. Procédé de fabrication d'une pièce décorative selon l'une quelconque des revendications précédentes, **caractérisé en ce que,** dans le cadre de la fabrication de la pièce décorative, la température maximale au sein de chaque doublure ou, dans le cas d'une doublure multicouche, au sein de chaque couche n'est pas supérieure à la température maximale au sein de la doublure ou couche située à l'avant du côté visible.

7. Procédé de fabrication d'une pièce décorative selon l'une quelconque des revendications précédentes, **caractérisé en ce que,** dans le cadre de la fabrication de la pièce décorative, la pression de compression d'une étape de doublage postérieure n'est pas inférieure à la pression de compression d'une étape de doublage succédant immédiatement à ladite étape de doublage postérieure.

8. Procédé de fabrication d'une pièce décorative selon l'une quelconque des revendications précédentes, **caractérisé en ce que,** dans le cadre de la fabrication de la pièce décorative, le temps de compression d'une étape de doublage antérieure est plus court que le temps de compression d'une étape de doublage succédant immédiatement à ladite étape de doublage antérieure.

9. Procédé de fabrication d'une pièce décorative selon l'une quelconque des revendications précédentes, **caractérisé en ce qu'**après l'application de la première doublure (4), la première couche (2) est munie d'au moins un fenêtre (12) traversant la première couche (2) et la première doublure (4), et **en ce qu'**une pression de moule agissant sur la face arrière de la seconde couche (6) lors de la réalisation de la couche de renforcement (10) enfonce dans la fenêtre (12) une région de la seconde couche (6) prévue sur une face arrière de la première couche (2).

10. Procédé de fabrication d'une pièce décorative selon la revendication 9, **caractérisé en ce que** la fenêtre (12) est laissée vide sur la structure en sandwich (16).

11. Procédé de fabrication d'une pièce décorative selon l'une quelconque des revendications précédentes, **caractérisé en ce qu'une** première doublure (4a, 4b) à deux couches est utilisée lors de la première étape de doublage, **en ce que** la première couche (2) est liée à une première couche de doublage (4a) appliquée contre la première couche (2), et **en ce que**, lors d'une seconde étape de doublage, la seconde couche (6) est liée, au niveau de son côté tourné vers la première couche (2), à une seconde couche de doublage (4b), appliquée contre la seconde couche (6), de la première doublure (4a, 4b) et, au niveau de son côté se détournant de la première couche (2), à la seconde doublure (8).

12. Procédé de fabrication d'une pièce décorative selon la revendication 11, **caractérisé en ce que, lors** de la première étape de doublage, la première couche de doublage (4a) appliquée contre la première couche (2) est fondue ou activée, mais pas la seconde couche de doublage (4b) de la première doublure (4a, 4b).
